# EUROPÄISCHE PATENTSCHRIFT

(11) **EP 2 944 804 B1**
(45) Veröffentlichungstag und Bekanntmachung des Hinweises auf die Patenterteilung: **17.10.2018**
(21) Anmeldenummer: 15158932.2
(22) Anmeldetag: 13.03.2015
(51) Int. Cl.: F03D 1/06

(54) **Lagerstruktur zur Lagerung von Windturbinenkomponenten**
BEARING STRUCTURE FOR WIND TURBINE COMPONENTS
STRUCTURE DE STOCKAGE DESTINÉE À STOCKER DES COMPOSANTS D'ÉOLIENNE

(30) Priorität: 12.05.2014 DE 102014208934
(43) Veröffentlichungstag der Anmeldung: 18.11.2015
(73) Patentinhaber: Siemens Aktiengesellschaft, 80333 München (DE)
(72) Erfinder: Jensen, Jens Bomholt, 8700 Horsens (DK)

(56) Entgegenhaltungen:
- EP-A2- 2 693 048
- DE-A1-102008 046 210
- US-A1- 2011 204 649

## Beschreibung

Lagerstruktur zur Lagerung von Windturbinenkomponenten Die Erfindung betrifft eine Lagerstruktur zur Lagerung von Windturbinenkomponenten, welche innerhalb eines auf einer Turmkonstruktion anzuordnenden oder angeordneten Windturbinenmaschinenhauses anzuordnen oder angeordnet sind, wobei die Lagerstruktur wenigstens zwei Trägerprofilstrukturen umfasst, welche über wenigstens eine Querverbindungsstruktur miteinander verbunden sind, wie z.B. aus US2011/0204649 bekannt.

Entsprechende Lagerstrukturen sind bekannt. Eine wesentliche Aufgabe solcher Lagerstrukturen besteht darin, innerhalb eines Windturbinenmaschinenhauses anzuordnende bzw. angeordnete Windturbinenkomponenten, wie z. B. einen elektrischen Generator, mechanische Kopplungs- bzw. Kupplungselemente zwischen einer Rotorblätter lagernden Rotornabe und einem entsprechenden elektrischen Generator etc., stabil und sicher zu lagern.

Derartige Lagerstrukturen sind typischerweise hohen, insbesondere auch oszillierenden, mechanischen Belastungen ausgesetzt, welche im Wesentlichen auf das Gewicht der zu lagernden Windturbinenkomponenten sowie auf im Betrieb einer Windturbine entstehende, sich in entsprechende Lagerstrukturen ausbreitende mechanische Schwingungen zurückzuführen sind.

Es besteht sonach ein kontinuierlicher Weiterentwicklungsbedarf entsprechender Lagerstrukturen im Hinblick auf deren mechanische Eigenschaften bzw. deren mechanische Stabilität.

Der Erfindung liegt die Aufgabe zugrunde, eine verbesserte Lagerstruktur zur Lagerung von Windturbinenkomponenten anzugeben.

Die Aufgabe wird durch eine Lagerstruktur der eingangs genannten Art gelöst, welche sich erfindungsgemäß dadurch auszeichnet, dass die Querverbindungsstruktur wenigstens zwei Verbindungsstreben umfasst, welche sich in einem Kreuzungsbereich kreuzen.

Die erfindungsgemäße Lagerstruktur umfasst als wesentliche Bestandteile wenigstens zwei Trägerprofilstrukturen sowie wenigstens eine diese verbindende Querverbindungsstruktur. Die Querverbindungsstruktur umfasst wenigstens zwei Verbindungsstreben, welche derart relativ zueinander angeordnet sind, dass sie sich in einem Kreuzungsbereich kreuzen.

Die die Querverbindungsstruktur bildenden Verbindungsstreben können mittelbar oder unmittelbar mit den Trägerprofilstrukturen verbunden sein. Unter einer mittelbaren Verbindung ist zu verstehen, dass eine Verbindungsstrebe unter Zwischenschaltung wenigstens eines weiteren Bauteils an einer Trägerprofilstruktur ansetzt und somit mittelbar über das wenigstens eine zwischengeschaltete Bauteil mit der Trägerprofilstruktur verbunden ist. Entsprechend ist unter einer unmittelbaren Verbindung zu verstehen, dass eine Verbindungsstrebe ohne Zwischenschaltung wenigstens eines weiteren Bauteils an einer Trägerprofilstruktur ansetzt und somit unmittelbar mit der Trägerprofilstruktur verbunden ist. Selbstverständlich ist es denkbar, dass eine Verbindungsstrebe mit einem ersten Verbindungsbereich mittelbar an einer Trägerprofilstruktur und mit einem zweiten Verbindungsbereich unmittelbar an einer weiteren Trägerprofilstruktur verbunden ist. Jeweilige Verbindungsbereiche sind typischerweise im Bereich der freien Enden einer Verbindungsstrebe angeordnet, ausgebildet oder eingerichtet.

Wie erwähnt, kreuzen sich wenigstens zwei Verbindungsstreben einer entsprechenden Querverbindungsstruktur in einem Kreuzungsbereich. Entsprechende sich kreuzende Verbindungsstreben erstrecken sich bzw. verlaufen sonach jeweils (im Wesentlichen) diagonal zwischen den Trägerprofilstrukturen, wobei sie mit ihren jeweiligen Längserstreckungen unterschiedlichen Diagonalen folgen.

Eine Verbindungsstrebe kann zumindest in dem Kreuzungsbereich oberhalb bzw. unterhalb einer weiteren Verbindungsstrebe angeordnet sein. Die Verbindungsstreben befinden sich hier zumindest in dem Kreuzungsbereich in unterschiedlichen parallelen Raumebenen. In dieser Variante kann die Querverbindungsstruktur Verbindungsstreben gleichen Typs, d. h. Verbindungsstreben gleicher geometrisch-konstruktiver Ausbildung, aufweisen.

Eine Verbindungsstrebe kann in dem Kreuzungsbereich auch durch eine weitere Verbindungsstrebe verlaufen. Die weitere Verbindungsstrebe ist, wie im Weiteren noch ausgeführt wird, hierfür derart ausgebildet bzw. eingerichtet, dass sie eine Durchgangsmöglichkeit für die bzw. wenigstens eine diese durchsetzende Verbindungsstrebe bildet. Die Verbindungsstreben befinden sich hier zumindest in dem Kreuzungsbereich in derselben Raumebene. In dieser Variante weist die Querverbindungsstruktur typischerweise Verbindungsstreben unterschiedlichen Typs, d. h. Verbindungsstreben unterschiedlicher geometrisch-konstruktiver Ausbildung, auf. Ein erster Typ ist dabei typischerweise mit einem einen Durchgangsmöglichkeit bildenden Durchgangssegment ausgebildet bzw. umfasst wenigstens ein entsprechendes Durchgangssegment. Ein zweiter Typ ist ohne eine entsprechendes Durchgangssegment ausgebildet bzw. umfasst kein entsprechendes Durchgangssegment.

Die Kreuzung bzw. der sich kreuzende Verlauf entsprechender Verbindungsstreben impliziert im Allgemeinen, dass die Verbindungsstreben einen bestimmten Kreuzungswinkel einschließen bzw. definieren. Der Kreuzungswinkel liegt typischerweise in einem Bereich zwischen 70 und 120°, insbesondere bei 90°. Selbstverständlich kann der Kreuzungswinkel durch Änderung der Ausrichtung bzw. Orientierung wenigstens einer Verbindungsstrebe geändert werden und somit auch unterhalb 70° bzw. oberhalb 120° liegen.

Die Trägerprofilstrukturen sind typischerweise als längliche, metallische, d. h. insbesondere aus Stahl gebildete, Bauteile ausgebildet. Die Trägerprofilstrukturen können z. B. I- oder T-förmige Querschnitte aufweisen, so dass es sich bei den Trägerprofilstrukturen entsprechend um I- oder T-Träger handeln kann.

Die Trägerprofilstrukturen sind typischerweise derart angeordnet, dass jede Trägerprofilstruktur eine Seitenfläche aufweist, welche einer Seitenfläche einer weiteren Trägerprofilstruktur gegenüber liegt. Hierunter ist insbesondere eine parallele Anordnung bzw. Ausrichtung entsprechender Trägerprofilstrukturen zu verstehen. Bei einer parallelen Anordnung bzw. Ausrichtung ändert sich der Abstand zwischen entsprechenden Seitenflächen der Trägerprofilstrukturen mit deren jeweiliger Längserstreckung nicht. Selbstverständlich ist es grundsätzlich auch denkbar, die Trägerprofilstrukturen nicht parallel anzuordnen bzw. auszurichten. Bei einer nicht parallelen Anordnung bzw. Ausrichtung ändert sich der Abstand zwischen entsprechenden Seitenflächen der Trägerprofilstrukturen mit deren jeweiliger Längserstreckung.

Die die Querverbindungsstruktur bildenden Verbindungsstreben sind typischerweise längliche, metallische, d. h. insbesondere aus Stahl gebildete, Bauteile. Die Verbindungsstreben können auch als Stangen oder Anker bezeichnet bzw. erachtet werden. Der Querschnitt der Verbindungsstreben ist grundsätzlich frei wählbar. Lediglich beispielhaft ist auf runde, ovale oder viereckige Querschnitte hinzuweisen.

Insgesamt ist durch die erfindungsgemäß mittels einer entsprechenden Querverbindungsstruktur realisierte Verbindung entsprechender Trägerprofilstrukturen eine Lagerstruktur mit einer erhöhten mechanischen Stabilität gegeben.

In obiger Beschreibung wurde erläutert, dass eine Querverbindungsstruktur Verbindungsstreben gleichen oder unterschiedlichen Typs umfassen kann.

In letzterem Fall kann wenigstens eine als erste Verbindungsstrebe bezeichnete Verbindungsstrebe eines ersten Typs und wenigstens eine als zweite Verbindungsstrebe bezeichnete Verbindungsstrebe eines zweiten bzw. weiteren Typs vorhanden sein, wobei eine erste Verbindungsstrebe mit wenigstens einem Durchgangssegment ausgebildet ist, welches Durchgangssegment eine Durchgangsmöglichkeit für wenigstens eine die erste Verbindungsstrebe kreuzende zweite Verbindungsstrebe bildet. Die oder eine erste Verbindungsstrebe ist also mit einem Durchgangssegment ausgebildet, welches von wenigstens einer zweiten Verbindungsstrebe durchsetzbar bzw. im zusammengebauten Zustand der Querverbindungsstruktur respektive der Lagerstruktur von wenigstens einer zweiten Verbindungsstrebe durchsetzt ist. Das Durchgangssegment ist typischerweise als sich in Längsrichtung der ersten Verbindungsstrebe erstreckende, z. B. schlitzförmige, Durchgangsöffnung ausgebildet. In jedem Fall ist das Durchgangssegment in dieser Ausführungsform integraler Bestandteil der ersten Verbindungsstrebe.

In dem Fall, in dem wenigstens eine erste und wenigstens eine zweite Verbindungsstrebe vorhanden ist, ist es auch denkbar, dass eine erste Verbindungsstrebe wenigstens zwei axial aufeinander folgende Verbindungsstrebensegmente und wenigstens ein zwischen die wenigstens zwei Verbindungsstrebensegmente geschaltetes Durchgangssegment umfasst, welches Durchgangssegment eine Durchgangsmöglichkeit für wenigstens eine die erste Verbindungsstrebe kreuzende zweite Verbindungsstrebe bildet. In dieser Ausführungsform umfasst die oder eine erste Verbindungsstrebe also wenigstens zwei axial aufeinander folgende Verbindungsstrebensegmente, zwischen welchen sich wenigstens ein Durchgangssegment befindet. Im Unterschied zu der vorstehend genannten Ausführungsform ist das Durchgangssegment in dieser Ausführungsform kein integraler Bestandteil einer ersten Verbindungsstrebe. Das Durchgangssegment ist hier typischerweise ein zwischen entsprechende Verbindungsstrebensegmente geschaltetes separates Bauteil. Denkbar ist es auch, dass das Durchgangssegment ein Bestandteil eines der beiden Verbindungsstrebensegmente und demnach mit einem Durchgangssegment ausgebildet ist. Die erste Verbindungsstrebe besteht sonach mindestens aus zwei Bauteilen. Analog zu dem vorstehend beschrieben Ausführungsbeispiel gilt, dass das Durchgangssegment von wenigstens einer zweiten Verbindungsstrebe durchsetzbar bzw. im zusammengebauten Zustand der Querverbindungsstruktur respektive der Lagerstruktur von wenigstens einer zweiten Verbindungsstrebe durchsetzt ist. Das Durchgangssegment umfasst typischerweise eine sich in Längsrichtung der ersten Verbindungsstrebe erstreckende, z. B. schlitzförmige, Durchgangsöffnung.

Selbstverständlich ist es möglich, dass die Querverbindungsstruktur unterschiedliche erste Verbindungsstreben, d. h. erste Verbindungsstreben gemäß den beschriebenen unterschiedlichen Ausführungsformen, umfasst.

Es ist zweckmäßig, wenn sich entsprechende erste und zweite Verbindungsstreben zumindest in dem Kreuzungsbereich nicht berühren. Mit anderen Worten ist es zweckmäßig, wenn eine zweite Verbindungsstrebe ein entsprechendes Durchgangssegment als integralen oder separaten Bestandteil einer ersten Verbindungsstrebe berührungsfrei bzw. kontaktfrei durchsetzt. Eine sich durch ein entsprechendes Durchgangssegment erstreckende zweite Verbindungsstrebe berührt das von dieser durchsetzte Durchgangssegment daher nicht. Derart lässt sich beispielsweise eine Schwingungsübertragung zwischen den beiden Verbindungsstreben unterbinden. Gleichermaßen lässt sich die Querverbindungsstruktur derart einfach montieren bzw. zusammensetzen.

Die Verbindungsstreben sind, insbesondere im Bereich ihrer jeweiligen freien Enden, typischerweise über lösbare Verbindungsmittel mit den jeweiligen Trägerprofilstrukturen verbunden. Derart lässt sich eine lösbare Verbindung zwischen entsprechenden Verbindungsstreben und entsprechenden Trägerprofilstrukturen ausbilden. Eine lösbare Verbindung bedeutet insbesondere, dass ein Lösen der jeweiligen Verbindungspartner auch ohne Beschädigung bzw. Zerstörung wenigstens eines der Verbindungspartner möglich ist.

Eine entsprechende lösbare Verbindung ist insbesondere über lösbare Verbindungsmittel realisiert. Derartige lösbare Verbindungsmittel sind insbesondere zur Ausbildung einer lösbaren Schraubverbindung geeignet. Bei entsprechenden lösbaren Verbindungsmitteln handelt es sich sonach vornehmlich um Schrauben, Schraubbolzen und zugehörige Muttern bzw. Gewindebohrungen aufweisende, insbesondere an einer Trägerprofilstruktur bzw. einer Verbindungsstrebe ausgebildete, Bauteilabschnitte.

Wie erwähnt, ist es denkbar, dass wenigstens eine Verbindungsstrebe mittelbar, d. h. unter Zwischenschaltung wenigstens eines weiteren Bauteils, mit einer Trägerprofilstruktur verbunden ist. Demnach ist es möglich, dass wenigstens eine Verbindungsstrebe, insbesondere im Bereich wenigstens eines freien Endes, über lösbare Verbindungsmittel mit wenigstens einem zwischen diese und eine jeweilige Trägerprofilstruktur geschalteten, insbesondere plattenförmigen, Verbindungselement verbunden ist, wobei das wenigstens eine Verbindungselement seinerseits über lösbare Verbindungsmittel mit der jeweiligen Trägerstruktur verbunden ist. Auch bei einem entsprechenden Verbindungselement handelt es sich typischerweise um ein metallisches, d. h. insbesondere aus Stahl, gebildetes Bauteil.

Bei entsprechenden lösbaren Verbindungsmitteln kann es sich wiederum um solche, welche zur Ausbildung einer lösbaren Schraubverbindung geeignet sind, mithin vornehmlich um Schrauben, Schraubbolzen und zugehörige Muttern bzw. Gewindebohrungen aufweisende, insbesondere an einer Trägerprofilstruktur bzw. einer Verbindungsstrebe ausgebildete, Bauteilabschnitte, handeln.

Um die mechanische Stabilität der Lagerstruktur weiter zu erhöhen, ist es denkbar, dass die Trägerprofilstrukturen mittels der Querverbindungsstruktur gegeneinander verspannt sind. Über die Querverbindungsstruktur, d. h. entsprechende dieser zugehörige Verbindungsstreben, lassen sich sonach Spann- bzw. Zugkräfte auf die Trägerprofilstrukturen ausbilden. Dies kann beispielsweise dadurch realisiert sein, dass der Abstand entsprechender verbindungsstrebenseitiger Verbindungsbereiche in axialer Richtung verringert wird, so dass eine Spann- bzw. Zugkraft auf die über die Verbindungsstreben verbundenen Trägerprofilstruktur ausgeübt wird.

Die Veränderung des Abstands jeweiliger verbindungsstrebenseitiger Verbindungsbereiche kann beispielsweise dadurch realisiert sein, dass die Verbindungsbereiche auf jeweilige im Bereich der freien Enden eines verbindungsstrebenseitigen Bolzens gebildete Gewinde aufgeschraubt sind, so dass diese über die derart gebildete Schraubverbindung in ihrer axialen Position relativ zueinander veränderbar sind.

Die mechanische Stabilität der Lagerstruktur kann weiterhin dadurch erhöht werden, dass die Trägerprofilstrukturen zusätzlich über wenigstens ein Trägerprofil verbunden sind, wobei sich das wenigstens eine Trägerprofil, ohne eine Verbindungsstrebe zu kreuzen, zwischen den Trägerprofilstrukturen erstreckt. Die oder das wenigstens eine weitere Trägerprofil erstreckt sich typischerweise quer zwischen entsprechenden Trägerprofilstrukturen. Bei dem Trägerprofil kann es sich z. B. um einen metallischen, d. h. insbesondere aus Stahl gebildeten, I- oder T-Träger handeln.

Die mechanische Stabilität der Lagerstruktur kann zusätzlich dadurch erhöht werden können, dass wenigstens zwei der Trägerprofile zudem über wenigstens ein weiteres Trägerprofil verbunden sind. Das wenigstens eine weitere Trägerprofil erstreckt sich sonach längs und somit parallel zu den Trägerprofilstrukturen. Auch bei dem weiteren Trägerprofil kann es sich z. B. um einen metallischen, d. h. insbesondere aus Stahl gebildeten, I- oder T-Träger handeln.

Sämtliche weiteren Trägerprofile sind zweckmäßig lösbar miteinander oder an entsprechenden Trägerprofilstrukturen angebunden. Entsprechend können die Trägerprofile bedarfsgerecht positioniert werden bzw. gegebenenfalls zeitweise entfernt werden, was z. B. im Rahmen von Servicearbeiten an Windturbinenkomponenten vorteilhaft sein kann. Eine lösbare Verbindung bedeutet auch in diesem Zusammenhang insbesondere, dass ein Lösen der jeweiligen Verbindungspartner auch ohne Beschädigung bzw. Zerstörung wenigstens eines der Verbindungspartner möglich ist.

Eine entsprechende lösbare Verbindung ist auch hier insbesondere über lösbare Verbindungsmittel realisiert. Derartige lösbare Verbindungsmittel sind insbesondere zur Ausbildung einer lösbaren Schraubverbindung geeignet. Bei entsprechenden lösbaren Verbindungsmitteln handelt es sich sonach vornehmlich um Schrauben, Schraubbolzen und zugehörige Muttern bzw. Gewindebohrungen aufweisende Bauteilabschnitte.

Die Erfindung betrifft ferner ein Windturbinenmaschinenhaus, umfassend wenigstens eine wie beschriebene Lagerstruktur. Mithin gelten sämtliche Ausführungen im Zusammenhang mit der Lagerstruktur analog für das Windturbinenmaschinenhaus. In dem Windturbinenmaschinenhaus sind diverse Windturbinenkomponenten, wie z. B. ein elektrischer Generator, eine diesem zugeordnete Kühleinrichtung, mechanische Kopplungs- bzw. Kupplungselemente zwischen einer Rotorblätter lagernden Rotornabe und einem entsprechenden elektrischen Generator etc. gelagert. Die Windturbinenkomponenten sind dabei typischerweise mittelbar oder unmittelbar auf der Lagerstruktur gelagert.

Die Erfindung betrifft überdies eine Windturbine, welche ein entsprechendes Windturbinenmaschinenhaus umfasst. Entsprechend gelten sämtliche Ausführungen im Zusammenhang mit der Lagerstruktur auch analog für die Windturbine. Das Windturbinenmaschinenhaus ist typischerweise auf einer windturbinenseitigen Turmkonstruktion angeordnet.
- Fig. 1 - 3: je eine Prinzipdarstellung einer Lagerstruktur gemäß einem Ausführungsbeispiel der Erfindung; und
- Fig. 4: eine Prinzipdarstellung eines Ausschnitts einer Windturbine gemäß einem Ausführungsbeispiel der Erfindung.

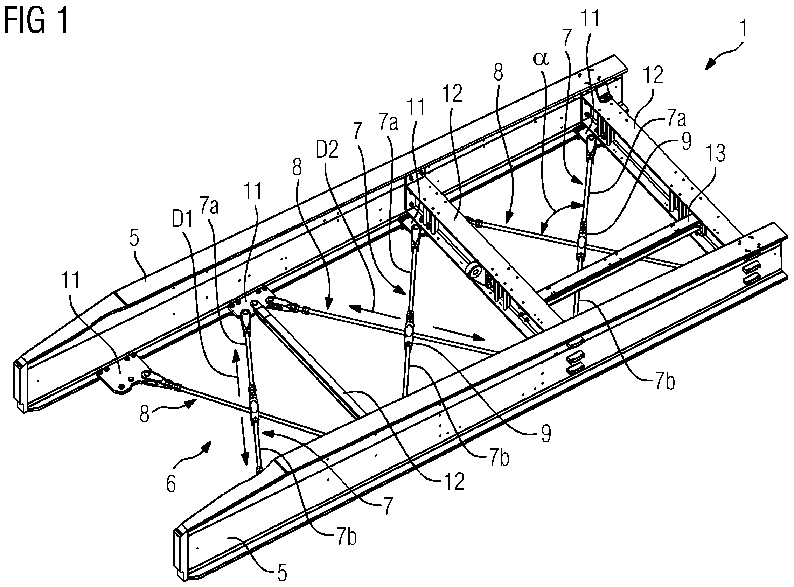

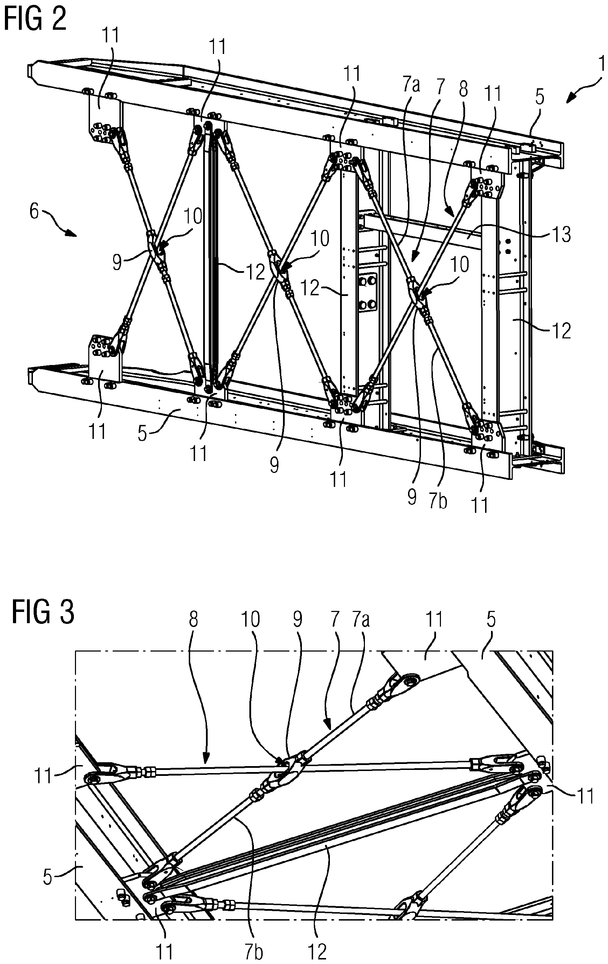

Die Fig. 1 - 3 zeigen jeweils eine Prinzipdarstellung einer Lagerstruktur 1 gemäß einem Ausführungsbeispiel der Erfindung. Ersichtlich zeigt Fig. 1 eine perspektivische Ansicht auf die Oberseite der Lagerstruktur 1, Fig. 2 eine perspektivische Ansicht auf die Unterseite der Lagerstruktur 1 und Fig. 3 eine Detailansicht eines Ausschnitts der Lagerstruktur 1.

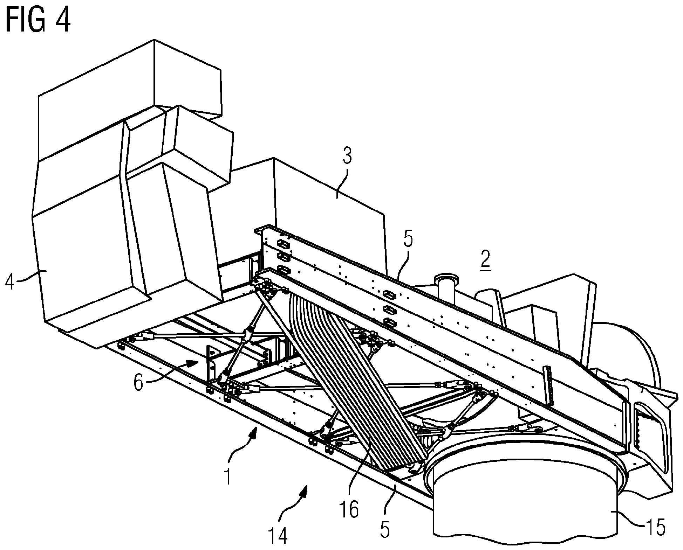

Die Lagerstruktur 1 dient im Allgemeinen der Lagerung von Windturbinenkomponenten, welche innerhalb eines auf einer windturbinenseitigen Turmkonstruktion 15 (vgl. Fig. 4) anzuordnenden oder angeordneten Windturbinenmaschinenhauses 2 (vgl. Fig. 4) anzuordnen oder angeordnet sind. Bei entsprechenden Windturbinenkomponenten handelt es sich beispielsweise um einen elektrischen Generator 3, eine diesem zugeordnete Kühleinrichtung 4, mechanische Kopplungs- bzw. Kupplungselemente (nicht gezeigt) zwischen einer Rotorblätter lagernden Rotornabe (nicht gezeigt) und einem entsprechenden elektrischen Generator 3 etc. Im Allgemeinen handelt es sich bei entsprechenden Windturbinenkomponenten um all jene Komponenten, die innerhalb des Windturbinenmaschinenhaus 2 anzuordnen oder angeordnet und somit mittelbar oder unmittelbar auf der Lagerstruktur 1 gelagert sind.

Die Lagerstruktur 1 umfasst zwei parallel angeordnete bzw. ausgerichtete Trägerprofilstrukturen 5. Bei den Trägerprofilstrukturen 5 handelt es sich um Stahlprofile mit einem I-förmigen Querschnitt und somit um I-Träger.

Ersichtlich sind die Trägerprofilstrukturen 5 über eine Querverbindungsstruktur 6 miteinander verbunden. Die Querverbindungsstruktur 6 umfasst eine Anzahl an Verbindungsstreben 7, 8. Bei den Verbindungsstreben 7, 8 handelt es sich um ein- oder mehrteilige stangenartige Stahlbauteile mit rundlichem Querschnitt. Die Verbindungsstreben 7, 8 können, wie sich im Weiteren ergibt, auch als Zuganker bezeichnet bzw. erachtet werden.

Ersichtlich erstrecken sich die Verbindungsstreben 7, 8 jeweils diagonal zwischen den Trägerprofilstrukturen 5. Erste Verbindungsstreben 7 erstrecken sich in Richtung einer durch den Doppelpfeil D1 angedeuteten ersten Diagonale zwischen den Trägerprofilstrukturen 5. Zweite Verbindungsstreben 8 erstrecken sich hierzu lotrecht und somit in Richtung einer durch den Doppelpfeil D2 angedeuteten zweiten Diagonale zwischen den Trägerprofilstrukturen 5.

Hieraus ergibt sich, dass sich jeweils eine erste Verbindungsstrebe 7 mit jeweils einer zweiten Verbindungsstrebe 8 in einem Kreuzungsbereich kreuzt. Sich kreuzende Verbindungsstreben 7, 8 können als Verbindungsstrebenpaar bezeichnet bzw. erachtet werden. Sich kreuzende Verbindungsstreben 7, 8 schließen einen Kreuzungswinkel α ein bzw. definieren einen solchen. Der Kreuzungswinkel α liegt typischerweise bei ca. 90°.

Die ersten Verbindungsstreben 7 unterscheiden sich von den zweiten Verbindungsstreben 8 jedoch nicht allein in ihrer Erstreckungsrichtung, sondern auch in ihrer funktionellen bzw. strukturellen Ausbildung.

Wie insbesondere anhand der Fig. 1 - 3 ersichtlich ist, ist die Kreuzung der Verbindungsstreben 7, 8 dadurch realisiert, dass jeweilige zweite Verbindungsstreben 8 jeweilige erste Verbindungsstreben 7 in dem Kreuzungsbereich durchsetzen. Dies ist dadurch ermöglicht, dass jeweilige erste Verbindungsstreben 7 in einem bezogen auf ihre Längserstreckung mittleren Bereich ein Durchgangssegment 9 aufweisen, welches eine Durchgangsmöglichkeit für wenigstens eine die jeweilige erste Verbindungsstrebe 7 kreuzende zweite Verbindungsstrebe 8 bildet. Die sich kreuzenden Verbindungsstreben 7, 8 berühren sich, insbesondere in dem Kreuzungsbereich, nicht.

Das Durchgangssegment 9, welches eine sich axial, d. h. in Längsrichtung der jeweiligen ersten Verbindungsstrebe 7 erstreckende schlitzförmige Durchgangsöffnung 10 aufweist (vgl. insbesondere Fig. 3), ist als separates Bauteil zwischen zwei Verbindungsstrebensegmente 7a, 7b geschaltet. Das Durchgangssegment 9 verbindet also die jeweiligen gegenüber liegenden freien Enden jeweiliger Verbindungsstrebensegmente 7a, 7b. Eine erste Verbindungsstrebe 7 besteht sonach zumindest aus zwei Verbindungsstrebensegmenten 7a, 7b und einem zwischen diese geschalteten Durchgangssegment 9.

Grundsätzlich ist es allerdings auch denkbar, ein entsprechendes Durchgangssegment 9 nicht als separates Bauteil zwischen entsprechende Verbindungsstrebensegmente 7a, 7b zu schalten, sondern eine erste Verbindungsstrebe 7 integral mit einem Durchgangssegment 9 auszubilden.

Die Verbindung der Verbindungsstreben 7, 8 mit den Trägerprofilstrukturen 5 ist mittels lösbarer Schraubverbindungen realisiert. Ersichtlich ist dabei zwischen die Verbindungsstreben 7, 8 und die Trägerprofilstrukturen 5 jeweils eine plattenartiges Verbindungselement 11 geschaltet, welches einerseits Verbindungspunkte für eine Verbindungsstrebe 7, 8 und andererseits Verbindungspunkte für eine Trägerprofilstruktur 5 aufweist. Die Verbindungsstreben 7, 8 sind sonach mittelbar mit den Trägerprofilstrukturen 5 verbunden.

Konkret erfolgt die Verbindung zwischen den Verbindungsstreben 7, 8 und einem entsprechenden Verbindungselement 11 mittels lösbarer Verbindungsmittel, d. h. Schrauben bzw. Schraubbolzen, welche einerseits, gegebenenfalls mit einem Gewinde versehene, Bohrungen in jeweiligen verbindungsstrebenseitigen klauenartigen Verbindungsbereichen und andererseits, gegebenenfalls mit einem Gewinde versehene, Bohrungen innerhalb des Verbindungselements 11 durchsetzen. Die Schrauben sind mittels Muttern fixiert. Die Muttern stellen ebenso Bestandteile jeweiliger lösbarer Verbindungsmittel dar.

Die Verbindung der Verbindungselemente 11 mit den Trägerprofilstrukturen 5 erfolgt analog. D. h., auch hier werden lösbare Verbindungsmittel eingesetzt, welche jeweilige, gegebenenfalls mit einem Gewinde versehene, Bohrungen innerhalb der Verbindungselemente 11 sowie innerhalb der Trägerprofilstrukturen 5 durchsetzen und mittels Muttern fixiert sind.

Über die durch die Verbindungsstreben 7, 8 gebildete Querverbindungsstruktur 6 können die Trägerprofilstrukturen 5 gleichermaßen gegeneinander verspannt sein bzw. werden. Über die Verbindungsstreben 7, 8 lassen sich sonach, im Sinne von Zugankern, Spann- bzw. Zugkräfte auf die Trägerprofilstrukturen 5 ausüben.

Ersichtlich erstrecken sich zwischen den Trägerprofilstrukturen 5 zudem weitere Trägerprofile 12, 13. Die lotrecht von sich gegenüber liegenden Seitenflächen der Trägerprofilstrukturen 5 abragenden und sich somit quer zur Längsachse der Trägerprofilstrukturen 5 erstreckenden verleihen der Lagerstruktur 1 zusätzlich mechanische Stabilität. Ersichtlich kreuzen die Trägerprofile 12 die Verbindungsstreben 7, 8 nicht.

Jeweilige Trägerprofile 12 können mittelbar über entsprechende Verbindungselemente 11 oder unmittelbar mit den Trägerprofilstrukturen 5 verbunden sein. Die Trägerprofile 12 können mittels sich parallel zur Längsachse der Trägerprofilstrukturen 5 erstreckender weiterer Trägerprofile 13 miteinander verbunden sein, wie in Fig. 1 exemplarisch dargestellt ist.

Fig. 4 zeigt eine Prinzipdarstellung eines Ausschnitts einer Windturbine 14 gemäß einem Ausführungsbeispiel der Erfindung. Dargestellt ist der Bereich eines auf einer Turmkonstruktion 15 gelagerten Windturbinenmaschinenhauses 2. Ersichtlich ist eine Kabelführung 16 an den Trägerprofilstrukturen 5 angebunden, über welche Kabelführung 16 verschiedene, insbesondere elektrische, Kabel geführt bzw. gehaltert sind. Das Gehäuse des Windturbinenmaschinenhauses 2 ist nicht gezeigt, um die innerhalb dieses angeordneten Windturbinenkomponenten besser zu zeigen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Lagerstruktur (1) zur Lagerung von Windturbinenkomponenten, welche innerhalb eines auf einer Turmkonstruktion (15) anzuordnenden oder angeordneten Windturbinenmaschinenhauses (2) anzuordnen oder angeordnet sind, wobei die Lagerstruktur (1) wenigstens zwei Trägerprofilstrukturen (5) umfasst, welche über wenigstens eine Querverbindungsstruktur (6) miteinander verbunden sind, **dadurch gekennzeichnet, dass** die Querverbindungsstruktur (6) wenigstens zwei sich diagonal zwischen den Trägerprofilstrukturen (5) erstreckende Verbindungsstreben (7, 8) umfasst, welche sich in einem Kreuzungsbereich kreuzen, wobei wenigstens eine erste und wenigstens eine zweite Verbindungsstrebe (7, 8) vorhanden ist, wobei eine erste Verbindungsstrebe (7) mit wenigstens einem Durchgangssegment (9) ausgebildet ist, welches Durchgangssegment (9) eine Durchgangsmöglichkeit für wenigstens eine die erste Verbindungsstrebe (7) kreuzende zweite Verbindungsstrebe (8) bildet.

2. Lagerstruktur nach Anspruch 1, **dadurch gekennzeichnet, dass** wenigstens eine erste und wenigstens eine zweite Verbindungsstrebe (7, 8) vorhanden ist, wobei eine erste Verbindungsstrebe (7) wenigstens zwei axial aufeinander folgende Verbindungsstrebensegmente (7a, 7b) und wenigstens ein zwischen die wenigstens zwei Verbindungsstrebensegmente (7a, 7b) geschaltetes Durchgangssegment (9) umfasst, welches Durchgangssegment (9) eine Durchgangsmöglichkeit für wenigstens eine die erste Verbindungsstrebe (7) kreuzende zweite Verbindungsstrebe (8) bildet.

3. Lagerstruktur nach Anspruch 1 oder 2, **dadurch gekennzeichnet, dass** sich entsprechende erste und zweite Verbindungsstreben (7, 8) zumindest in dem Kreuzungsbereich nicht berühren.

4. Lagerstruktur nach einem der vorangehenden Ansprüche, **dadurch gekennzeichnet, dass** die Verbindungsstreben 87, 8) sich unter einem in einem Bereich zwischen 70 und 120° liegenden Kreuzungswinkel (α), insbesondere unter einem Kreuzungswinkel (α) von 90°, kreuzen.

5. Lagerstruktur nach einem der vorangehenden Ansprüche, **dadurch gekennzeichnet, dass** die Verbindungsstreben (7, 8), insbesondere im Bereich ihrer jeweiligen freien Enden, über lösbare Verbindungsmittel mit den jeweiligen Trägerprofilstrukturen (5) verbunden sind.

6. Lagerstruktur nach einem der vorangehenden Ansprüche, **dadurch gekennzeichnet, dass** wenigstens eine Verbindungsstrebe (7, 8), insbesondere im Bereich eines ihrer jeweiligen freien Endes, über lösbare Verbindungsmittel mit wenigstens einem zwischen diese und eine jeweilige Trägerprofilstruktur (5) geschalteten, insbesondere plattenförmigen, Verbindungselement (11) verbunden ist, wobei das wenigstens eine Verbindungselement (11) seinerseits über lösbare Verbindungsmittel mit der jeweiligen Trägerprofilstruktur (5) verbunden ist.

7. Lagerstruktur nach Anspruch 5 oder 6, **dadurch gekennzeichnet, dass** die lösbaren Verbindungsmittel zur Ausbildung einer lösbaren Schraubverbindung eingerichtet sind.

8. Lagerstruktur nach Anspruch 7, **dadurch gekennzeichnet, dass** die lösbaren Verbindungsmittel wenigstens eine Schraube, wenigstens einen Schraubbolzen und wenigstens eine zugehörige Mutter bzw. wenigstens einen eine Gewindebohrung aufweisenden, insbesondere an einer Trägerstruktur (5) und/oder an einem Verbindungselement (11) gebildeten, Bauteilabschnitt umfassen.

9. Lagerstruktur nach einem der vorangehenden Ansprüche, **dadurch gekennzeichnet, dass** die Trägerprofilstrukturen (5) mittels der Querverbindungsstruktur (6) gegeneinander verspannbar oder verspannt sind.

10. Lagerstruktur nach einem der vorangehenden Ansprüche, **dadurch gekennzeichnet, dass** die Trägerprofilstrukturen (5) zusätzlich über wenigstens ein Trägerprofil (12) verbunden sind, wobei sich das wenigstens eine Trägerprofil (12), ohne eine Verbindungsstrebe (7, 8) zu kreuzen, zwischen den Trägerprofilstrukturen (5) erstreckt.

11. Lagerstruktur nach Anspruch 10, **dadurch gekennzeichnet, dass** wenigstens zwei Trägerprofile (12) über wenigstens ein weiteres Trägerprofil (13) verbunden sind.

12. Windturbinenmaschinenhaus (2), umfassend wenigstens eine Lagerstruktur (1) nach einem der vorangehenden Ansprüche.

13. Windturbine (14), umfassend ein Windturbinenmaschinenhaus (2) nach Anspruch 12.

## Claims

1. Support structure (1) for supporting wind turbine components which are to be arranged or are arranged within a wind turbine nacelle (2) that is to be arranged or is arranged on a tower construction (15), wherein the support structure (1) comprises at least two girder section structures (5) which are connected together via at least one cross-connection structure (6), **characterized in that** the cross-connection structure (6) comprises at least two connecting struts (7, 8) which extend diagonally between the girder section structures (5) and intersect in an intersection region, wherein provision is made of at least one first and of at least one second connecting strut (7, 8), wherein a first connecting strut (7) is formed with at least one passage segment (9), said passage segment (9) forming a passage means for at least one second connecting strut (8) intersecting the first connecting strut (7).

2. Support structure according to Claim 1, **characterized in that** provision is made of at least one first and of at least one second connecting strut (7, 8), wherein a first connecting strut (7) comprises at least two axially successive connecting strut segments (7a, 7b) and at least one passage segment (9) fitted between the at least two connecting strut segments (7a, 7b), said passage segment (9) forming a passage means for at least one second connecting strut (8) intersecting the first connecting strut (7).

3. Support structure according to Claim 1 or 2, **characterized in that** corresponding first and second connecting struts (7, 8) are not in contact at least in the intersecting region.

4. Support structure according to one of the preceding claims, **characterized in that** the connecting struts (7, 8) intersect at an intersection angle (α) in a range between 70 and 120°, in particular at an intersection angle (α) of 90°.

5. Support structure according to one of the preceding claims, **characterized in that** the connecting struts (7, 8) are connected, in particular in the region of their respective free ends, to the respective girder section structures (5) via releasable connecting means.

6. Support structure according to one of the preceding claims, **characterized in that** at least one connecting strut (7, 8) is connected, in particular in the region of one of its respective free ends, to at least one, in particular plate-like, connecting element (11) via releasable connecting means, said connecting element (11) being fitted between said connecting means and a respective girder section structure (5), wherein the at least one connecting element (11) is for its part connected to the respective girder section structure (5) via releasable connecting means.

7. Support structure according to Claim 5 or 6, **characterized in that** the releasable connecting means are designed to form a releasable screw connection.

8. Support structure according to Claim 7, **characterized in that** the releasable connecting means comprise at least one screw, at least one screw bolt and at least one associated nut or, respectively, at least one component section that has a threaded bore and is formed in particular on a girder structure (5) and/or on a connecting element (11).

9. Support structure according to one of the preceding claims, **characterized in that** the girder section structures (5) are mutually braceable or braced by means of the cross-connection structure (6).

10. Support structure according to one of the preceding claims, **characterized in that** the girder section structures (5) are additionally connected via at least one girder section (12), wherein the at least one girder section (12) extends between the girder section structures (5) without intersecting a connecting strut (7, 8).

11. Support structure according to Claim 10, **characterized in that** at least two girder sections (12) are connected via at least one further girder section (13).

12. Wind turbine nacelle (2) comprising at least one support structure (1) according to one of the preceding claims.

13. Wind turbine (14) comprising a wind turbine nacelle (2) according to Claim 12.

## Revendications

1. Structure de stockage (1) pour le stockage de composants d'éoliennes, qui doivent venir se disposer ou qui sont disposés au sein d'une nacelle (2) d'une éolienne à disposer ou disposée sur une construction en forme de tour (15) ; dans laquelle la structure de stockage (1) comprend au moins deux structures (5) en forme de profilés de support, qui sont reliées l'une à l'autre via au moins une structure de liaison transversale (6), **caractérisée en ce que** la structure de liaison transversale (6) comprend au moins deux entretoises de liaison (7, 8) s'étendant en direction diagonale entre les structures (5) en forme de profilés de support, qui se croisent dans une zone croisement ; dans laquelle sont présentes au moins une première et au moins une deuxième entretoise de liaison (7, 8) ; dans laquelle une première entretoise de liaison (7) est réalisée avec au moins un segment de passage (9), ledit segment de passage (9) offrant une possibilité de passage pour au moins une deuxième entretoise de liaison (8) qui croise la première entretoise de liaison (7).

2. Structure de stockage selon la revendication 1, **caractérisée en ce qu'**au moins une première et au moins une deuxième entretoise de liaison (7, 8) sont présentes ; dans laquelle une première entretoise de liaison (7) comprend au moins deux segments d'entretoise de liaison (7a, 7b) qui se suivent l'un l'autre en direction axiale et au moins un segment de passage (9) monté entre lesdits au moins deux segments d'entretoise de liaison (7a, 7b), ledit segment de passage (9) offrant une possibilité de passage pour au moins une deuxième entretoise de liaison (8) qui croise la première entretoise de liaison (7).

3. Structure de stockage selon la revendication 1 ou 2, **caractérisée en ce que** des première et deuxième entretoises de liaison correspondantes (7, 8) ne se touchent pas au moins dans la zone croisement.

4. Structure de stockage selon l'une quelconque des revendications précédentes, **caractérisée en ce que** les entretoises de liaison (7, 8) se croisent en formant un angle de croisement (α) qui se situe au sein d'une plage entre 70 et 120°, en particulier en formant un angle de croisement (α) de 90°.

5. Structure de stockage selon l'une quelconque des revendications précédentes, **caractérisée en ce que** les entretoises de liaison (7, 8) sont reliées, en particulier dans la zone de leurs extrémités libres respectives, via des moyens de liaison amovibles aux structures respectives (5) en forme de profilés de support.

6. Structure de stockage selon l'une quelconque des revendications précédentes, **caractérisée en ce qu'**au moins une entretoise de liaison (7, 8) est reliée, en particulier dans la zone d'une de ses extrémités libres respectives, via des moyens de liaison amovibles, à au moins un élément de liaison (11), en particulier en forme de plaque, monté entre ceux-ci et une structure respective (5) en forme d'un profilé de support ; dans laquelle ledit au moins un élément de liaison (11) est relié, pour sa part, via des moyens de liaison amovibles à la structure respective (5) en forme d'un profilé de support.

7. Structure de stockage selon la revendication 5 ou 6, **caractérisée en ce que** les moyens de liaison amovibles sont conçus pour obtenir une liaison amovible à visser.

8. Structure de stockage selon la revendication 7, **caractérisée en ce que** les moyens de liaison amovibles comprennent au moins une vis, au moins un boulon fileté et au moins un écrou correspondant, respectivement au moins un segment partiel de construction présentant un alésage taraudé, en particulier formé contre une structure de support (5) et/ou contre un élément de liaison (11).

9. Structure de stockage selon l'une quelconque des revendications précédentes, **caractérisée en ce que** les structures (5) en forme de profilés de support peuvent être encastrées ou sont encastrées les unes dans les autres au moyen de la structure de liaison transversale (6) .

10. Structure de stockage selon l'une quelconque des revendications précédentes, **caractérisée en ce que** les structures (5) en forme de profilés de support sont reliées en outre via au moins un profilé de support (12) ; dans laquelle ledit au moins un profilé de support (12) s'étend entre les structures (5) en forme de profilés de support sans croiser une entretoise de liaison (7, 8).

11. Structure de stockage selon la revendication 10, **caractérisée en ce qu'**au moins deux profilés de support (12) sont reliés via au moins un profilé de support supplémentaire (13).

12. Nacelle (2) pour une éolienne, comprenant au moins une structure d'entreposage (1) selon l'une quelconque des revendications précédentes.

13. Éolienne (14) comprenant une nacelle d'éolienne (2) selon la revendication 12.
